# EUROPÄISCHE PATENTSCHRIFT

(11) **EP 0 679 347 B1**
(45) Veröffentlichungstag und Bekanntmachung des Hinweises auf die Patenterteilung: **25.11.1998**
(21) Anmeldenummer: 95105363.6
(22) Anmeldetag: 10.04.1995
(51) Int. Cl.: A43B 7/12, A43B 9/00, B29D 31/508

(54) **Wasserdichter Schuh**
Waterproof shoe
Chaussure étanché

(30) Priorität: 25.04.1994 DE 9406905 U
(43) Veröffentlichungstag der Anmeldung: 02.11.1995
(73) Patentinhaber: W.L. GORE & ASSOCIATES GmbH, 85636 Putzbrunn (DE)
(72) Erfinder: Nötzold, Günter, D-84036 Landshut (DE)
(74) Vertreter: Klunker . Schmitt-Nilson . Hirsch

(56) Entgegenhaltungen:
- EP-A- 0 298 360
- EP-A- 0 594 029
- DE-A- 2 106 984
- DE-A- 4 138 836
- DE-U- 1 863 944
- FR-A- 2 576 195

## Beschreibung

Die Erfindung betrifft einen wasserdichten Schuh mit einem Obermaterialschaft aus einem wasser- und wasserdampfdurchlässigen Obermaterial, einer mit dem Obermaterialschaft mittels einer Naht vernähten Brandsohle und einem auf der Innenseite des Obermaterialschaftes angeordneten Funktionsschichtschaft, der mit einem Funktionsschichtlaminat aufgebaut ist, das eine wasserdichte, wasserdampfdurchlässige Funktionsschicht und eine Textilschicht auf mindestens einer Seite der Funktionsschicht aufweist, wobei sich die Brandsohle, der untere, brandsohlenseitige Obermaterialschaftrand und der untere, brandsohlenseitige Funktionsschichtschaftrand innerhalb einer angespritzten Kunststoffsohle befinden.

Ein Schuh mit einem derartigen Aufbau weist den Vorteil auf, daß er nicht nur wasserdicht sondern atmungsaktiv ist. Wasser, das von außen auf den Schuh einwirkt, kann somit nicht bis zum Fuß vordringen. Anders als bei wasserdichten Schuhen, die mit einem wasser- und wasserdampfundurchlässigen Außenmaterial aufgebaut sind, beispielsweise Gummistiefel, kann Fußschweiß durch die Funktionsschicht hindurch und durch das wasser- und wasserdampfdurchlässige Obermaterial hindurch nach außen entweichen.

Für die Wasserdichtigkeit von Schuhen mit einer Funktionsschicht sind Nähte problematisch, welche die Funktionsschicht durchsetzen. Um dieses Problem zu überwinden, hat man schon sockenartige Funktionsschichteinsätze zwischen Schaft und Laufsohle bzw. Brandsohle einerseits und einem Innenfutter des Schuhs andererseits verwendet. Da ein solcher sockenartiger Einsatz durch Verschweißen in seine Form gebracht werden kann, braucht er keine Nahtlöcher aufzuweisen. Diese Methode ist jedoch recht aufwendig in der Herstellung, wenn die sockenartigen Einsätze einigermaßen der jeweiligen Schuhform angepaßt sein sollen.

Ein Schuh mit einem Aufbau der einleitend angegebenen Art ist bekannt aus der EP 02 98 360 B1. Dort sind der Brandsohlenrand, der untere Funktionsschichtschaftrand und der untere Obermaterialschaftrand mit einer einzigen Naht miteinander vernäht. Um zu vermeiden, daß Wasser den Schaft hinab bis zu dieser Verbindungsnaht und entlang der Verbindungsnaht durch die Nahtlöcher der Funktionsschicht hindurch zur Innenseite des Schuhs gelangt, besteht bei diesem bekannten Schuh der untere Bereich des Obermaterialschaftes aus einem monofilen Netzband, das keinerlei Wasserleitfähigkeit aufweist. Das Netzband ist an seinem unteren Ende mittels der bereits erwähnten Naht mit der Brandsohle und mit dem unteren Funktionsschichtschaftrand vernäht. An seinem oberen Rand ist das Netzband nur mit dem restlichen Teil des Obermaterialschaftes vernäht, nicht jedoch mit dem Funktionsschichtschaft. Wasser, das den Obermaterialschaft hinabkriecht, kann somit nicht bis zu der den Funktionsschichtschaftrand durchsetzenden Naht gelangen.

Mit dieser Lösung wird ein weiteres Problem überwunden. Das Funktionsschichtlaminat weist mindestens auf der vom Obermaterialschaft abgelegenen Innenseite der Funktionsschicht eine Textilschicht auf, im allgemeinen in Form eines Futtertextils. Beim Zuschneiden des Funktionsschichtlaminates ist es praktisch unvermeidbar, daß sich an der Schnittstelle Textilfädchen um die Schnittkante der Funktionsschicht herum zu deren Außenseite legen. Diese Textilfädchen wirken als Wasserbrücken, wenn auf der Außenseite der Funktionsschicht Wasser bis zu der Schnittkante hinab gelangt. Durch Verwendung des monofilen Netzbandes kann aber Wasser nicht bis zu der Schnittkante der Funktionsschicht gelangen, so daß sich die Wasserbrückenfunktion, welche solche Fädchen an sich haben, nicht auswirken kann.

Die Verwendung des monofilen Netzbandes hat sich sehr gut bewährt. Mit dieser Technik konnte man eine sehr hohe Zuverlässigkeit hinsichtlich der Wasserdichtigkeit von solchen wasserdichten, atmungsaktiven Schuhen erreichen, die nicht mit einem geschlossenen, sockenartigen Funktionsschichteinsatz ausgerüstet sind. Die Lösung mit dem Netzband ist jedoch insbesondere bei kleinen Schuhgrößen, wie Kinderschuhen, etwas schwierig in der Handhabung, wenn man eine Faltenbildung des Netzes vermeiden möchte, insbesondere an den Stellen, an welchen die Schuhkontur eine starke Krümmung aufweist. Hier schafft eine Erleichterung ein Schuh, wie er aus der DE 41 38 836 A1 bekannt ist. Bei diesem Schuh wird - wie bei dem aus der EP 02 98 360 B1 bekannten Schuh - der Obermaterialschaftrand kürzer geschnitten als der Funktionsschichtschaftrand, wird jedoch die Lücke zwischen dem Obermaterialschaftrand und dem Funktionsschichtschaftrand nicht durch ein Netzband geschlossen sondern gänzlich offen gelassen. D.h., mit dem Brandsohlenrand ist nun nur noch der untere Funktionsschichtschaftrand vernäht. Der untere Obermaterialschaftrand endet in einem bestimmten Abstand von dem unteren Funktionsschichtschaftrand. Der untere Obermaterialschaftrand ist mit dem Funktionsschichtschaft verklebt, um die Funktionsschicht an dieser Stelle durchsetzende Nahtlöcher zu vermeiden. Die Lücke zwischen unterem Obermaterialschaftrand und Brandsohlennaht wird durch die angespritzte Laufsohle geschlossen.

Auch diese Lösung führt zu einer sehr hohen Zuverlässigkeit von atmungsaktiven Schuhen hinsichtlich Wasserdichtigkeit. Es ist jedoch einige Geschicklichkeit erforderlich, um einen derartigen Schuh herzustellen.

Da bei den beiden bekannten Lösungen der untere Obermaterialschaftrand des eigentlichen Obermaterials ein Stück über der Brandsohlennaht endet, muß die angespritzte Laufsohle eine entsprechend hohe Seitenwand aufweisen, damit das untere Ende des Obermaterialschaftrandes bzw. das Netzband nicht freiliegen.

Es ist Aufgabe der vorliegenden Erfindung, einen wasserdichten Schuh der eingangs angegebenen Art verfügbar zu machen, der sich leichter herstellen läßt als die oben erwähnten bekannten Schuhe und der sich außerdem mit einer angespritzten Laufsohle mit niedrigerer Seitenwandhöhe herstellen läßt.

Die Lösung der Erfindung besteht in einem wasserdichten Schuh der eingangs angegebenen Art, der dadurch gekennzeichnet ist, daß der untere Obermaterialschaftrand und der untere Funktionsschichtschaftrand auf ungleiche Länge geschnitten sind, derart, daß einer dieser beiden Ränder über den anderen dieser beiden Ränder übersteht, wobei der untere Funktionsschichtschaftrand an der Naht nicht beteiligt ist, daß die Brandsohle mindestens in ihrem an die Naht angrenzenden Bereich aus Material besteht, das für den beim Anspritzen der Laufsohle flüssigen Laufsohlenkunststoff durchlässig ist, und daß der untere Funktionsschichtschaftrand in Laufsohlenkunststoff eingebettet ist.

Im vorliegenden Zusammenhang wird der Begriff "Kunststoff" als Kurzbegriff verwendet, der auch spritzfähigen Natur- oder Kunstkautschuk umfassen soll.

Bei dem erfindungsgemäßen wasserdichten Schuh hat der beim Anspritzen flüssige Laufsohlenkunststoff die für ihn durchlässige Brandsohle durchdrungen, während sich der Schuh auf einem Leisten befand, wobei der Laufsohlenkunststoff das Ende des unteren Funktionsschichtschaftrandes umspülte, so daß dieses untere Ende beim fertigen Schuh von Laufsohlenkunststoff eingebettet ist. Besonders wichtig ist dabei, daß sich Laufsohlenkunststoff auf der zum Obermaterialschaft weisenden Außenseite des Funktionsschichtlaminates und im Bereich von dessen Schnittrand befindet. Durch die Einbettung des Schnittrandes in Laufsohlenkunststoff werden den Schnittrand der Funktionsschicht überbrückende Textilfädchen als mögliche Wasserbrücken unschädlich gemacht. Das Auftreffen von Laufsohlenkunststoff auf die Außenseite des Funktionsschichtlaminates ist besonders wichtig, weil die Funktionsschicht des Funktionsschichtlaminates auf der Außenseite freiliegt oder lediglich von einer Textilarmierung bedeckt ist, durch welche hindurch der flüssige Laufsohlenkunststoff bis zu der Funktionsschicht vordringen kann. Beim Vorgang des Anspritzens der Laufsohle wird daher die Außenseite der Funktionsschicht unabhängig davon, ob sich auf dieser eine armierende Textilschicht befindet oder nicht, von dem Laufsohlenkunststoff abgedichtet. Wasser, das am Obermaterialschaft entlang nach unten in Richtung zur Brandsohlennaht kriecht, kann nun nicht mehr an der Außenseite der Funktionsschicht bis zu deren Schnittrand hinunterwandern und über Wasserbrücken in Form von Textilfädchen auf die Innenseite des Funktionsschichtlaminates und damit zum Fuß des Benutzers eines solchen Schuhs gelangen.

Im Rahmen der vorliegenden Erfindung sind mehrere Varianten möglich. Bei einer ersten Variante ist der untere Funktionsschichtschaftrand kürzer geschnitten als der untere Obermaterialschaftrand. Ein bevorzugter Überstand des unteren Obermaterialschaftrandes über den unteren Funktionsschichtschaftrand liegt im Bereich von 5mm bis 7mm. Um in diesem Fall die Handhabung bei der Herstellung zu erleichtern, empfiehlt es sich, die Außenseite des unteren Funktionsschichtschaftrandes mittels eines Klebers an der Innenseite des unteren Obermaterialschaftrandes zu fixieren. Damit der Laufsohlenkunststoff beim Anspritzen der Laufsohle den unteren Funktionsschichtschaftrand einbetten kann, befindet sich der Kleber in einem vorbestimmten Abstand vom Schnittrand des unteren Funktionsschaftrandes. Der lose Endbereich des unteren Funktionsschaftrandes kann dann beim Anspritzen der Laufsohle von allen Seiten von Laufsohlenkunststoff umspült werden.

Bei einer zweiten Variante ist der untere Funktionsschichtschaftrand ebenfalls kürzer geschnitten als der untere Obermaterialschaftrand. Dabei ist aber der Kleber unmittelbar am Schnittende des unteren Funktionsschaftrandes positioniert. Der untere Funktionsschichtschaftrand wäre dann für den Anspritzvorgang bis zum Schnittrand hin fixiert. In diesem Fall kann man als Kleber den gleichen Kunststoff wie für die Laufsohle verwenden, damit nach dem Anspritzen der Laufsohle der untere Funktionsschichtschaftrand in Laufsohlenkunststoff eingebettet ist.

Für diese zweite Variante besteht allerdings auch die Möglichkeit, einen anderen Kunststoff als den Laufsohlenkunststoff als Kleber zu verwenden. Dies könnte ein Kleber sein, der sich weitgehend wie der Laufsohlenkunststoff verhält und der die Abdichtung der Außenseite des unteren Funktionsschichtschaftrandes im wesentlichen in gleicher Weise wie Laufsohlenkunststoff bewirkt.

Verwendet man bei dieser zweiten Variante einen Kleber, der eine Abdichtung wie Laufsohlenkunststoff nicht bewirkt, kann man den unteren Obermaterialschaft oberhalb des Klebers perforieren, damit dort die Außenseite des Funktionsschichtlaminates mit Laufsohlenkunststoff verklebt und abgedichtet wird.

Bei einer dritten Variante ist der untere Obermaterialschaftrand gleich lang oder kürzer geschnitten als der untere Funktionsschichtschaftrand. Ein bevorzugter Überstand des unteren Funktionsschichtschaftrandes über den unteren Obermaterialschaftrand liegt im Bereich von 5mm bis 7mm. Daher liegt das untere Ende des unteren Funktionsschichtschaftrandes über einem Randbereich der Brandsohle, und zwar bis zum Vorgang des Anspritzens der Laufsohle lose bezüglich Brandsohle und Obermaterialschaft. Beim Vorgang des Anspritzens der Laufsohle wird auch bei dieser Variante wieder der Bereich des unteren Funktionsschichtschaftrandes auf dessen Außenseite, dessen Innenseite und dessen Schnittfläche von Laufsohlenkunststoff ummantelt und rundum abgedichtet. Auch bei dieser Variante kann man zur leichteren Handhabung bei der Schuhherstellung den Funktionsschichtschaft und den Obermaterialschaft in deren unteren Bereichen mittels eines Klebers auseinander fixieren. Beispielsweise bringt man einen solchen Kleber in einem Abstand von etwa 5mm von dem unteren Ende des Obermaterialschaftes an.

Wenn es erwünscht ist, die Außenseite des Funktionsschichtlaminates im Bereich des unteren Funktionsschichtschaftrandes großflächig mit Laufsohlenkunststoff abzudichten, kann man bei allen genannten Varianten der Erfindung den unteren Obermaterialschaftrand in einem an die Brandsohlennaht angrenzenden von der Laufsohlenseitenwand bedeckten Bereich perforieren.

Die Durchlässigkeit der Brandsohle für den beim Anspritzen der Laufsohle flüssigen Laufsohlenkunststoff wird beispielsweise durch Perforation der Brandsohle erreicht. Bei einer bevorzugten Ausführungsform wird eine Brandsohle mit einem aufgrund seiner Herstellungsart für flüssigen Laufsohlenkunststoff durchlässigen Material aufgebaut. Beispiel hierfür sind Netzmaterial, gewebte, gewirkte und gestrickte Textilien, sowie insbesondere Vliesmaterialien.

Die Brandsohle besteht vorzugsweise aus Material, das bezüglich des beim Anspritzen der Laufsohle flüssigen Laufsohlenkunststoffes nicht saugend ist. Die Brandsohlennaht kann eine Strobelnaht sein. Besonders vorteilhaft ist es, die Brandsohlennaht als Spann-Naht auszubilden, also als eine Naht, mittels welcher der Brandsohlenrand und der untere Obermaterialschaftrand vom Schuhleisten weg gespannt werden, so daß das flüssige Laufsohlenmaterial besonders leicht zu dem unteren Funktionsschichtschaftrand vordringen und diesen umspülen kann.

Bei einer bevorzugten Ausführungsform ist die Brandsohlennaht bezüglich der Außenkontur des Obermaterialschaftes um ein vorbestimmtes Ausmaß in Richtung zur Brandsohlenmitte hin nach innen versetzt. In diesem Fall kann man die Seitenwandhöhe der Laufsohle noch stärker verringern.

Um ein besonders wirksames Umspülen des unteren Funktionsschichtschaftrandes zu erreichen, verwendet man zur Herstellung eines erfindungsgemäßen Schuhs vorzugsweise einen Leisten, dessen Leistenboden mit punktförmigen oder anderen, beispielsweise wellenförmigen Erhebungen versehen ist. Auf diese Weise wird beim Anspritzvorgang ein Abstand zwischen dem Leistenboden und der für den flüssigen Laufsohlenkunststoff durchlässigen Brandsohle sicher gestellt, was die Wirksamkeit der Umspülung des unteren Funktionsschichtrandes mit flüssigem Laufsohlenkunststoffmaterial erhöht.

Durch eine perforierte Brandsohle beim Anspritzen einer Laufsohle flüssigen Laufsohlenkunststoff hindurchzuspritzen, ist an sich bereits bekannt aus der FR-A-2 576 195. Dort befindet sich auf der der Laufsohle entgegengesetzten Seite der Brandsohle eine Zwischensohle mit Verankerungsöffnungen, in welche der beim Anspritzen flüssige Laufsohlenkunstoff eindringen soll, um die Laufsohle an dieser Zwischensohle zu verankern.

Die Erfindung wird nun anhand von Ausführungsformen näher erläutert. In den Zeichnungen zeigen in schematischer Querschnittsdarstellung:
- Fig. 1: eine erste Ausführungsform eines erfindungsgemäßen Schuhs;
- Fig. 2: eine zweite Ausführungsform eines erfindungsgemäßen Schuhs; und
- Fig. 3: eine dritte Ausführungsform eines erfindungsgemäßen Schuhs;
wobei der zur Herstellung des Schuhs verwendete Leisten jeweils noch nicht aus dem Schuh genommen ist.

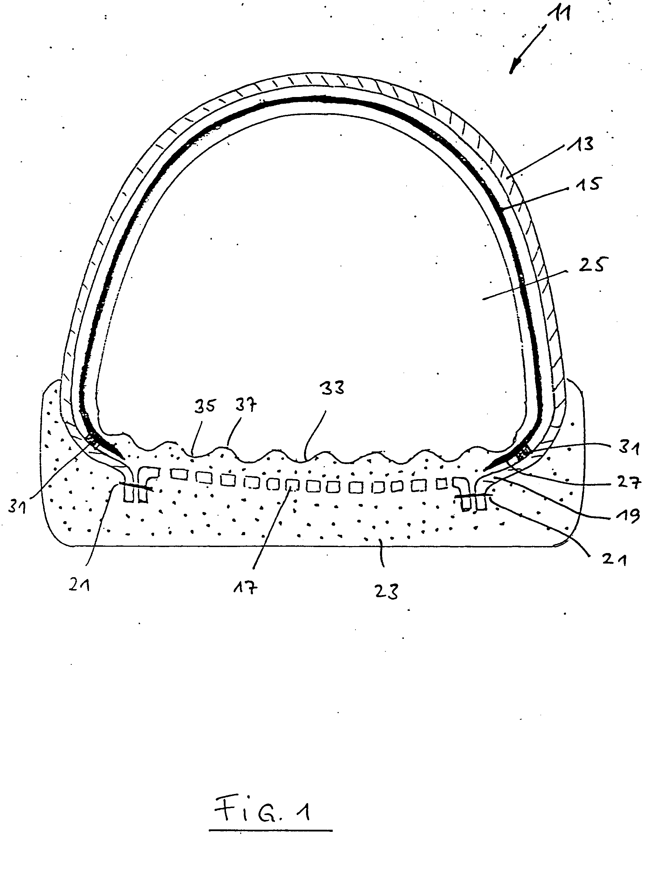

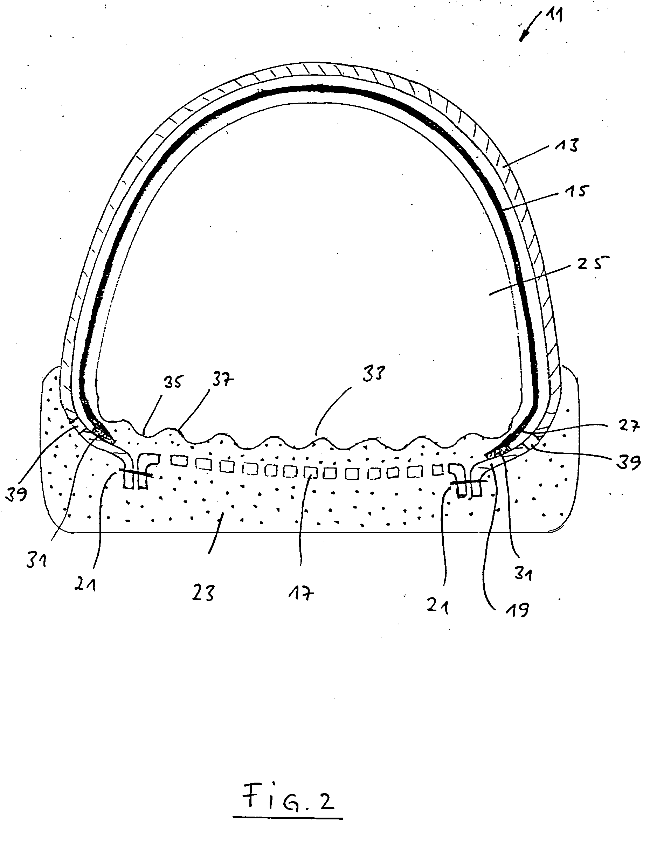

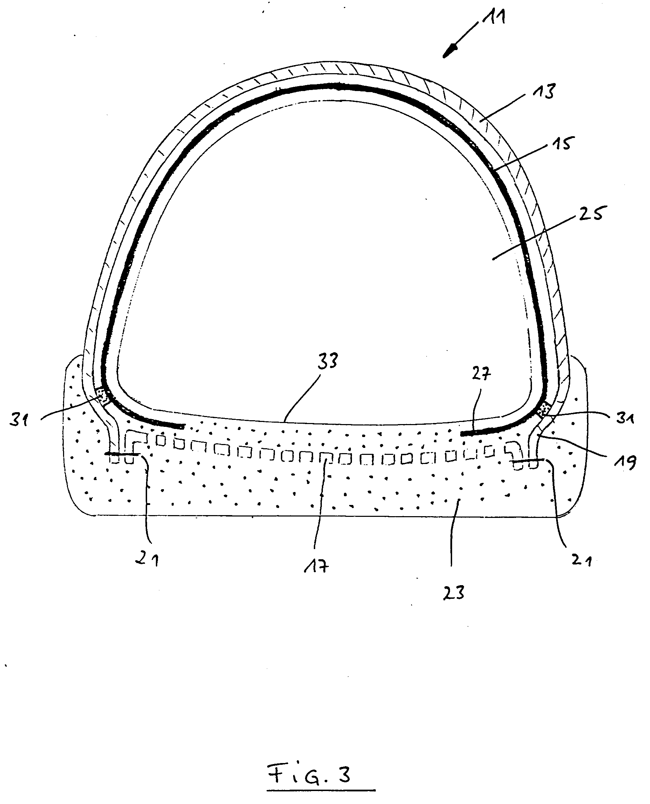

Die Fig. 1 und 2 zeigen Ausführungsformen eines erfindungsgemäßen Schuhs, bei welchen der untere Funktionsschichtschaftrand kürzer geschnitten ist als der untere Obermaterialschaftrand. Fig. 3 zeigt eine Ausführungsform, bei welcher der untere Funktionsschichtschaftrand länger geschnitten ist als der untere Obermaterialschaftrand.

Übereinstimmende Merkmale sind in den Fig. 1 bis 3 mit gleichen Bezugszeichen versehen.

Fig. 1 zeigt eine Ausführungsform eines wasserdichten, atmungsaktiven Schuhs 11 mit einem Obermaterialschaft 13, einem innerhalb des Obermaterialschafts 13 befindlichen Funktionsschichtschaft 15, einer perforierten Brandsohle 17, die mit einem unteren Obermaterialschaftrand 19 mittels einer Naht 21 vernäht ist, und einer Laufsohle in Form einer angespritzten Kunststoffsohle 23. Innerhalb des Schuhs befindet sich noch ein zur Herstellung des Schuhs verwendeter Leisten 25.

Ein unterer Funktionsschichtschaftrand 27 ist kürzer geschnitten als der untere Obermaterialschaftrand 19. Der Funktionsschichtschaft 15 besteht aus einem Funktionsschichtlaminat mit einer wasserdichten, wasserdampfdurchlässigen Funktionsschicht, auf deren zum Obermaterialschaft 13 weisender Außenseite sich eine (nicht dargestellte) textile Armierung befindet und auf deren zum Leisten 25 weisender Innenseite sich eine (nicht dargestellte) Futtertextilschicht befindet.

Wichtig ist, daß der untere Funktionsschichtschaftrand 27 nicht an der Naht 21 zwischen Brandsohle 17 und unterem Oberschaftmaterialschaft 19 beteiligt ist. Vielmehr liegt das freie untere Ende des unteren Funktionsschichtmaterialschaftrandes 27 vor dem Vorgang des Anspritzens der Laufsohle lose zwischen Leisten 25 und unterem Obermaterialschaftrand 19. Zur leichteren Handhabung bei der Herstellung des Schuhs ist der untere Funktionsschichtschaftrand 27 in einem vorbestimmten Abstand vom Ende 29 des unteren Funktionsschichtschaftrandes mittels eines Kleberstreifens 31 festgeheftet.

Der Leistenboden 33 des Leistens 25 weist Wellenform auf, um Wellenberge 35 zwischen Wellentälern 37, von der Leistenmitte aus gesehen, vorzusehen und die Brandsohle 17 mit Hilfe der Wellenberge 35 während des Vorgangs des Anspritzens der Laufsohle 23 über weite Teile in einem Mindestabstand vom Leistenboden 33 zu halten. Dabei sollte sich im Bereich des freien Endes des unteren Funktionsschaftrandes 29 ein Wellental 37 befinden, um an dieser Stelle ein gutes Umspülen des unteren Funktionsschichtschaftrandes 29 zu gewährleisten.

Das freie Ende des unteren Funktionsschichtschaftrandes 27 ist an seiner Innenseite abgeschrägt dargestellt. Damit ist in schematischer Weise angedeutet, daß dieses Ende abgeschärft ist. D.h., die Futtertextilschicht auf der Innenseite der Funktionsschicht ist mit einem Schrägschnitt abgeschabt, damit das beim Anspritzen flüssige Laufsohlenmaterial dort bis zur Innenseitenoberfläche der Funktionsschicht vordringen kann. Denn das Futtertextil des Funktionsschichtlaminates wird normalerweise von dem flüssigen Laufsohlenmaterial nicht bis hin zur Funktionsschicht durchdrungen.

Die Naht 21 kann als Strobelnaht oder als Spann-Naht ausgebildet sein. Bevorzugt wird die Ausbildung als Spann-Naht, weil dabei die an die Spann-Naht angrenzenden Bereiche von Brandsohle 17 und unterem Obermaterialschaftrand 19 vom Leistenboden 33 weg gezogen werden, so daß besonders viel Raum für das Einspülen von flüssigem Laufsohlenmaterial in diesen Raum und ein besonders gutes Umspülen von Außenseite, Innenseite und Schnittfläche des unteren Funktionsschichtschaftrandes 27 und damit ein gutes Ummanteln dieser Bereiche mit Laufsohlenmaterial bewirkt wird.

Die in Fig. 2 dargestellte Ausführungsform stimmt mit der in Fig. 1 gezeigten Ausführungsform überein mit der Ausnahme, daß sich der Kleberstreifen 31 nicht in einem Abstand vom freien Ende des unteren Funktionsschichtschaftrandes 27 befindet sondern in unmittelbarer Nachbarschaft dieses freien Endes. In diesem Fall besteht die Möglichkeit, daß der Kleberstreifen 31 nicht nur zur Fixierung der unteren Enden von Obermaterialschaftrand und Funktionsschichtschaftrand verwendet wird, sondern daß der Kleberstreifen 31 auch die Abdichtfunktion des Laufsohlenmaterials auf der Außenseite des unteren Funktionsschichtschaftrandes 29 übernimmt. Vorteilhafterweise wird in diesem Fall der Kleberstreifen aus dem gleichen Material wie die Laufsohle hergestellt, beispielsweise aus Polyurethan (PU), wie es häufig für angespritzte Laufsohlen verwendet wird.

Insbesondere dann, wenn bei dieser Ausführungsform der Kleberstreifen 31 aus Klebstoff besteht, der keine ausreichende Abdichtung bewirkt, kann der untere Obermaterialschaftrand 19 in dem Bereich zwischen dem Kleberstreifen 31 und der Oberkante der Laufsohlenseitenwand mit einer Perforation 39 versehen sein. Dann kann Laufsohlenkunststoff die Außenseite des Funktionsschichtlaminates im Bereich oberhalb des Kleberstreifens 31 abdichten. Eine solche Perforation 39 kann aber bei allen Ausführungsvarianten vorteilhaft sein.

Die in Fig. 3 gezeigte Ausführungsform stimmt mit den in den Fig. 1 und 2 gezeigten Ausführungsformen weitgehend überein, mit den beiden Ausnahmen, daß einerseits der untere Funktionsschichtschaftrand 27 länger geschnitten ist als der untere Obermaterialschaftrand 19 und daß ein Leisten 25 mit ebenem Leistenboden 33 verwendet wird. Macht man gemäß Fig. 3 den unteren Funktionsschichtschaftrand 27 länger als den unteren Obermaterialschaftrand 19, kommt das freie Ende des unteren Funktionsschichtschaftrandes 27 soweit unter der Unterseite des Leistenbodens 33 zu liegen, daß eine Kleberfixierung zwischen unterem Funktionsschichtschaftrand 27 und unterem Obermaterialschaftrand 19, wie in Figur 3 in Form des Klebers 31 dargestellt, nicht unbedingt erforderlich ist. In diesem Fall liegt der untere Funktionsschichtschaftrand 27 lose zwischen Leistenboden 33 und perforierter Brandsohle 17, wenn der Vorgang des Anspritzens flüssigen Kunststoffs zur Bildung der Laufsohle 23 durchgeführt wird.

Auch bei dieser Ausführungsform ist es wieder vorteilhaft, als Naht 21 eine Spann-Naht zu verwenden, um die Brandsohle 17 und den unteren Obermaterialschaftrand 19 im Bereich dieser Naht möglichst weit vom Leistenboden 33 weg zu spannen und Raum zu halten für das Umströmen der Innenseite, der Außenseite und der Schnittfläche des unteren Funktionsschichtschaftrandes 27 mit flüssigem Laufsohlenmaterial.

Auch bei dieser Ausführungsform könnte wieder ein Leisten 25 mit ungleichmäßigem, beispielsweise wellenförmigem, Leistenboden 33 verwendet werden.

Die Funktionsschicht des Funktionsschichtlaminates besteht vorzugsweise aus mikroporösem Polytetrafluorethylen (PTFE).

Für die Funktionsschicht geeignete Materialien umfassen mikroporöses gerecktes Polytetrafluorethylen (PTFE), wie es in den US-Patentschriften 3,953,566 und 4,187,390 beschrieben ist; gerecktes PTFE, das mit hydrophilen Imprägniermitteln und/oder Schichten versehen ist, wie es in der US-Patentschrift 4,194,041 beschrieben ist; atmungsfähige Polyurethanschichten; oder Elastomere, wie Copolyetherester und deren Laminate, wie es in den US-Patentschriften 4,725,481 und 4,493,870 beschrieben ist.

## Patentansprüche

1. Wasserdichter Schuh (11) mit einem Obermaterialschaft (13) aus einem wasser- und wasserdampfdurchlässigen Obermaterial, einer mit dem Obermaterialschaft (13) mittels einer Naht (21) vernähten Brandsohle und einem auf der Innenseite des Obermaterialschaftes (13) angeordneten Funktionsschichtschaft (15), der mit einem Funktionschichtlaminat aufgebaut ist, das eine wasserdichte, wasserdampfdurchlässige Funktionsschicht und eine Textilschicht auf mindestens einer Seite der Funktionsschicht aufweist, wobei sich die Brandsohle (17), der untere, brandsohlenseitige Obermaterialschaftrand (19) und der untere, brandsohlenseitige Funktionsschichtschaftrand (27) innerhalb einer angespritzten Kunststoffsohle (23) befinden,
**dadurch gekennzeichnet,**
daß der untere Obermaterialschaftrand (19) und der untere Funktionsschichtschaftrand (27) auf ungleiche Länge geschnitten sind, derart, daß einer dieser beiden Ränder (19, 27) über den anderen dieser beiden Ränder (19, 27) übersteht, wobei der untere Funktionsschichtschaftrand (27) an der Naht (21) nicht beteiligt ist,
daß die Brandsohle (17) mindestens an ihrem an die Naht (21) angrenzenden Bereich aus Material besteht, das für den beim Anspritzen der Laufsohle flüssigen Laufsohlenkunststoff durchlässig ist,
und daß der untere Funktionsschichtschaftrand (27) in Laufsohlenkunststoff eingebettet ist.

2. Schuh nach Anspruch 1,
**dadurch gekennzeichnet,**
daß die Brandsohle (17) mit Netzmaterial oder gewebten, gewirkten oder gestrickten Textilien oder mit Vliesmaterial aufgebaut ist.

3. Schuh nach Anspruch 1 oder 2,
**dadurch gekennzeichnet,**
daß die Brandsohle (17) aus Material besteht, das bezüglich des beim Anspritzen der Laufsohle flüssigen Laufsohlenkunststoffs nicht saugend ist.

4. Schuh nach einem der Ansprüche 1 bis 3,
**dadurch gekennzeichnet,**
daß der untere Obermaterialschaftrand (19) in dem an die Naht (21) angrenzenden Bereich perforiert ist.

5. Schuh nach einem der Ansprüche 1 bis 4,
**dadurch gekennzeichnet,**
daß das Funktionsschichtlaminat im Bereich seines unteren Funktionsschichtschaftrandes (27) mittels Klebstoffs (31) an der Innenseite des Obermaterialschaftes (13) fixiert ist.

6. Schuh nach Anspruch 5,
**dadurch gekennzeichnet,**
daß der Klebstoff (31) aus wasserdichtem Material besteht.

7. Schuh nach einem der Ansprüche 1 bis 6,
**dadurch gekennzeichnet,**
daß der untere Obermaterialschaftrand (19) und die Brandsohle (17) mittels einer Strobelnaht (21) miteinander vernäht sind.

8. Schuh nach einem der Ansprüche 1 bis 6,
**dadurch gekennzeichnet,**
daß der untere Obermaterialschaftrand (19) und die Brandsohle (17) mittels einer Spann-Naht (21) miteinander vernäht sind.

9. Schuh nach einem der Ansprüche 1 bis 8,
**dadurch gekennzeichnet,**
daß die Naht (21) bezüglich der Außenkontur des Obermaterialschaftes (13) um ein vorbestimmtes Ausmaß in Richtung zur Brandsohlenmitte hin nach innen versetzt ist.

10. Schuh nach einem der Ansprüche 1 bis 9,
**dadurch gekennzeichnet,**
daß sich auf der der Laufsohlenlauffläche entgegengesetzten, oberen Seite der Brandsohle (17) Laufsohlenkunststoff befindet.

11. Schuh nach Anspruch 10,
**dadurch gekennzeichnet,**
daß der oberhalb der oberen Seite der Brandsohle (17) befindliche Laufsohlenkunststoff eine Oberfläche mit Erhebungen und Vertiefungen aufweist.

12. Schuh nach Anspruch 11,
**dadurch gekennzeichnet,**
daß die Erhebungen und Vertiefungen gemeinsam eine Wellenform bilden.

13. Schuh nach einem der Ansprüche 1 bis 12,
**dadurch gekennzeichnet,**
daß die Funktionsschicht aus mikroporösem Polytetrafluorethylen, d.h. PTFE, besteht.

14. Schuh nach einem der Ansprüche 1 bis 13,
**dadurch gekennzeichnet,**
daß die Laufsohle aus Polyurethan, d.h. PU, besteht.

## Claims

1. A waterproof shoe (11) comprising an outside material shaft (13) of a water- and water vapour-permeable outside material, an insole sewn to the outside material shaft (13) by way of a seam (21), and a functional layer shaft (15) arranged on the inside of the outside material shaft (13) and incorporating a functional layer laminate having a waterproof, water vapour-permeable functional layer and a textile layer on at least one side of the functional layer, the insole (17), the lower outside material shaft edge (19) on the side of the insole and the lower functional layer shaft edge (27) on the side of the insole being located within an injection-moulded plastics sole (23),
characterized in
that the lower outside material shaft edge (19) and the lower functional layer shaft edge (27) are cut to unequal lengths such that one of these two edges (19, 27) projects beyond the other one thereof, with the lower functional layer shaft edge (27) not participating in the seam (21),
that the insole (17) at least in its region adjoining the seam (21) consists of a material that is permeable for the outsole plastics material which is liquid during injection-moulding,
and in the that lower functional layer shaft edge (27) is embedded in outsole plastics material.

2. The shoe of claim 1,
characterized in
that the insole (17) is composed with net-like material or woven or knitted textiles or with nonwoven material.

3. The shoe of claim 1 or 2,
characterized in
that the insole (17) consists of material showing no suction properties with respect to the liquid outsole plastics material during injection-moulding.

4. The shoe of any of claims 1 to 3,
characterized in
that the lower outside material shaft edge (19) is perforated in the region adjoining seam (21).

5. The shoe of any of claims 1 to 4,
characterized in
that the functional layer laminate, in the region of its lower functional layer shaft edge (27), is fixed to the inside of outside material shaft (13) by means of adhesive (31).

6. The shoe of claim 5,
characterized in
that the adhesive (31) consists of waterproof material.

7. The shoe of any of claims 1 to 6,
characterized in
that the lower outside material shaft edge (19) and the insole (17) are sewn to each other by a Strobel seam (21).

8. The shoe of any of claims 1 to 6,
characterized in
that the lower outside material shaft edge (19) and the insole (17) are sewn to each other by a tension seam (21).

9. The shoe of any of claims 1 to 8,
characterized in
that the seam (21), with respect to the outer contour of the outside material shaft (13), is displaced by a predetermined amount to the inside, towards the insole centre.

10. The shoe of any of claims 1 to 9,
characterized in
that outsole plastics material is provided on the top side of insole (17) opposite the outsole tread.

11. The shoe of claim 10,
characterized in
that the outsole plastics material disposed above the top side of insole (17) has a surface with elevations and depressions.

12. The shoe of claim 11,
characterized in
that the elevations and depressions together constitute a wave-like shape.

13. The shoe of any of claims 1 to 12,
characterized in
that the functional layer consists of microporous polytetrafluoroethylene, i.e. PTFE.

14. The shoe of any of claims 1 to 13,
characterized in
that the outsole consists of polyurethane, i.e. PU.

## Revendications

1. Chaussure (11) imperméable à l'eau comprenant une empeigne (13) formant le matériau du dessus et réalisée dans un matériau du dessus perméable à l'eau et à la vapeur d'eau, une semelle intérieure cousue, au moyen d'une couture (21), à l'empeigne (13) formant le matériau du dessus, et une empeigne (15) formant la couche fonctionnelle disposée sur la face intérieure de l'empeigne (13) formant le matériau du dessus, laquelle empeigne formant la couche fonctionnelle est constituée par un laminé de la couche fonctionnelle, qui comprend une couche fonctionnelle imperméable à l'eau, perméable à la vapeur d'eau et une couche textile sur au moins une face de la couche fonctionnelle, où la semelle intérieure (17), le bord inférieur (19) de l'empeigne formant le matériau du dessus, côté semelle intérieure, et le bord inférieur (27) de l'empeigne formant la couche fonctionnelle, côté semelle intérieure, se trouvent à l'intérieur d'une semelle (23) en matière plastique moulée par injection,
caractérisée
en ce que le bord inférieur (19) de l'empeigne formant le matériau du dessus et le bord inférieur (27) de l'empeigne formant la couche fonctionnelle sont coupés à une longueur inégale, de façon telle que l'un de ces deux bords (19, 27) dépasse de l'autre bord (19, 27), où le bord inférieur (27) de l'empeigne formant la couche fonctionnelle n'est pas pris dans la couture (21),
en ce que la semelle intérieure (17) se compose, au moins au niveau de sa zone contigue à la couture (21), d'un matériau qui est perméable à la matière plastique liquide de la semelle extérieure, utilisée au cours du moulage par injection de la semelle extérieure, et
en ce que le bord inférieur (27) de l'empeigne formant la couche fonctionnelle est noyé dans la matière plastique de la semelle extérieure.

2. Chaussure selon la revendication 1, caractérisée en ce que la semelle intérieure (17) est réalisée dans une matière filetée ou dans des textiles tissés ou tricotés, ou dans une matière non tissée.

3. Chaussure selon la revendication 1 ou 2, caractérisée en ce que la semelle intérieure (17) se compose d'un matériau qui n'est pas absorbant en ce qui concerne la matière plastique liquide de la semelle extérieure utilisée au cours du moulage par injection de la semelle extérieure.

4. Chaussure selon l'une quelconque des revendications 1 à 3, caractérisée en ce que le bord inférieur (19) de l'empeigne formant le matériau du dessus est perforé dans la zone contigue à la couture (21).

5. Chaussure selon l'une quelconque des revendications 1 à 4, caractérisée en ce que le laminé de la couche fonctionnelle, dans la zone de son bord inférieur (27) de l'empeigne formant la couche fonctionnelle, est fixé au moyen d'un adhésif (31) sur la face intérieure de l'empeigne (13) formant le matériau du dessus.

6. Chaussure selon la revendication 5, caractérisée en ce que l'adhésif (31) se compose d'un matériau imperméable à l'eau.

7. Chaussure selon l'une quelconque des revendications 1 à 6, caractérisée en ce que le bord inférieur (19) de l'empeigne formant le matériau du dessus et la semelle intérieure (17) sont cousus ensemble au moyen d'une couture grossière (21).

8. Chaussure selon l'une quelconque des revendications 1 à 6, caractérisée en ce que le bord inférieur (19) de l'empeigne formant le matériau du dessus et la semelle intérieure (17) sont cousus ensemble au moyen d'une couture tendue (21).

9. Chaussure selon l'une quelconque des revendications 1 à 8, caractérisée en ce que la couture (21), concernant le contour extérieur de l'empeigne (13) formant le matériau du dessus, est décalée vers l'intérieur, suivant une ampleur prédéterminée, en direction du milieu de la semelle intérieure.

10. Chaussure selon l'une quelconque des revendications 1 à 9, caractérisée en ce que la matière plastique de la semelle extérieure se trouve sur la face supérieure de la semelle intérieure (17) à l'opposé de la surface de contact de la semelle extérieure.

11. Chaussure selon la revendication 10, caractérisée en ce que la matière plastique de la semelle extérieure, se trouvant au-dessus de la face supérieure de la semelle intérieure (17), présente une surface avec des crêtes et des creux.

12. Chaussure selon la revendication 11, caractérisée en ce que les crêtes et les creux constituent ensemble une forme d'ondulations.

13. Chaussure selon l'une quelconque des revendications 1 à 12, caractérisée en ce que la couche fonctionnelle se compose de polytétrafluoroéthylène (PTFE) microporeux.

14. Chaussure selon l'une quelconque des revendications 1 à 13, caractérisée en ce que la semelle extérieure est en polyuréthane (PU).
